# EUROPEAN PATENT SPECIFICATION

(11) **EP 2 476 998 B1**
(45) Date of publication and mention of the grant of the patent: **19.10.2016**
(21) Application number: 12151290.9
(22) Date of filing: 16.01.2012
(51) Int. Cl.: G01C 9/20

(54) **Liquid container and inclination detector including the same**
Flüssigkeitsbehälter und Neigungsdetektor damit
Récipient de liquide détecteur d'inclinaison l'incluant

(30) Priority: 17.01.2011 JP 2011007219
(43) Date of publication of application: 18.07.2012
(73) Proprietor: Kabushiki Kaisha TOPCON, Tokyo 174-8580 (JP)
(72) Inventor: Ohtomo, Fumio, Tokyo, 174-8580 (JP); Kumagai, Kaoru, Tokyo, 174-8580 (JP)
(74) Representative: Ilgart, Jean-Christophe

(56) References cited:
- EP-A2- 1 772 703
- FR-A- 716 056
- FR-A1- 2 868 834
- JP-A- S60 316
- JP-A- S56 107 112
- JP-A- S59 187 213
- US-A- 5 068 645
- US-A- 5 526 022

## Description

The present invention relates to a liquid container for an inclination detector and an inclination detector for a surveying device, for example.

Japanese Patent Application Publication No. 2007-127628 discloses a conventional inclination detector incorporated in a surveying device, for example.

Such an inclination detector includes a container of liquid forming a free surface, a light source for emitting a light beam to the free surface, a visual field pattern disposed between the light source and the free surface to form the light beam from the light source in pattern, an optical sensor to detect the pattern of the light beam reflected by the free surface, and an arithmetic unit to find an inclination of the container on the basis of the pattern received by the optical sensor.

This inclination detector is configured to reflect the light beam at the center of the liquid surface which is slightly curved in a concave due to surface tension. Also, the shape of the liquid surface is changed in accordance with an inclination of the container. That is, the surface of liquid in a cylindrical container has an elliptic shape, and along with an increase in the inclination of the container, the elliptic shape changes so that a difference in short and long diameters thereof increases. Thus, as the inclination of the container increases, the curved shape of the center of the liquid surface is more changed, disadvantageously affecting the precision of inclination detection.

Besides, US 5,526,022 A, FR 716 056 A, US 5,068,645 A, FR 2868834 A1, JP S56-107112 A , JP S0316 A and JP S59-187213 A also disclose relevant prior art related to inclination detectors.

An object of the present invention is to provide an inclination detector according to claim 1 which can detect inclination with precision irrespective of the degree of inclination of the liquid container.

According to one embodiment of the present invention, a liquid container for use in an inclination detector includes a container body containing liquid forming a free surface and having a circumferential wall being spherical, in which the circumferential wall is formed so that a center of the circumferential wall and a center of the free surface coincide with each other.

Features, embodiment, and advantages of the present invention will become apparent from the following detailed description with reference to the accompanying drawing:

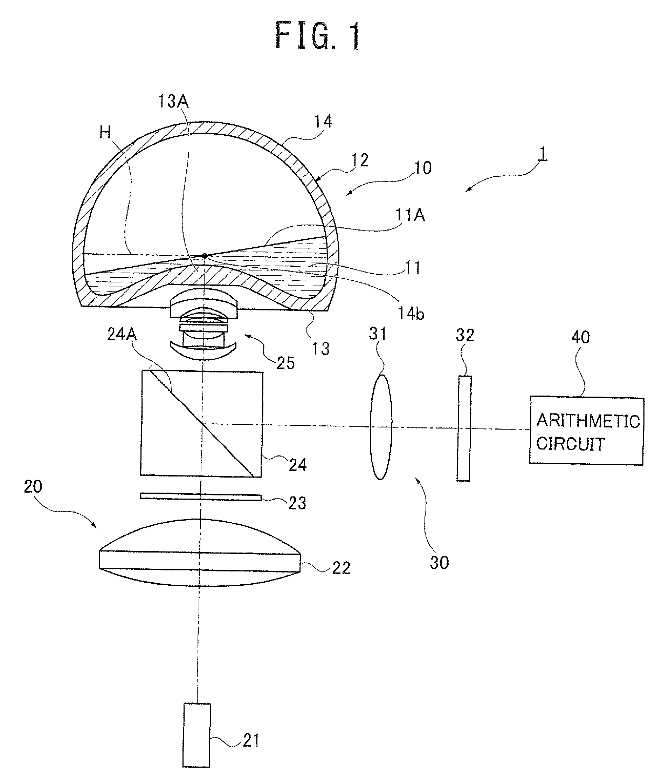

FIG. 1 is a cross sectional view of the structures of a liquid container and an optical system of an inclination detector according to one embodiment of the present invention.

Hereinafter, one embodiment of the present invention will be described in detail with reference to the accompanying drawing.

An inclination detector 1 in FIG. 1 includes a liquid container 10, a light emitting system 20 to emit a light beam to a liquid free surface, a light receiving system 30 having a light receiving element 32 to receive reflected light from the free surface of the liquid container 10, and an arithmetic circuit 40 as an arithmetic unit to calculate the inclination angle of a later-described container body on the basis of the light received by the light receiving element 32. The liquid container 10, light emitting system 20, and light receiving system 30 are integrally provided in a not-shown housing.

The liquid container 10 is comprised of a transparent container body 12 containing liquid 11 such as silicon oil.

The container body 12 includes a circular bottom 13, a circumferential wall 14 in a spherical form and integrated with the bottom 13, and a wave dissipating portion 13A protruding upward from the center part of the bottom 13 and a spherical center 14b.

The center 14b of the spherical circumferential wall 14 coincides with the center of the liquid free surface 11A, that is, the level of the liquid 11 is set to come at the center 14b of the circumferential wall 14.

The light emitting system 20 includes an LED 21 as a light source, a condenser lens 22, a dark-field pattern 23, a beam splitter 24, and a relay lens 25 as an optical relay element.

The condenser lens 22 and the relay lens 25 are arranged so that light is reflected or imaged at the center of the liquid free surface 11A.

The dark-field pattern 23 is a pattern to find inclinations of the container body relative to X and Y axes. The pattern is formed in a conventional manner disclosed in Japanese Patent Application Publication No. 2007-127628, therefore, a description thereof is omitted herein. X axis refers to horizontal direction in FIG. 1 while Y axis refers to direction orthogonal to the drawing.

The light receiving system 30 includes the relay lens 25, beam splitter 24, a projection lens 31, and an optical sensor 32 as CCD. The dark-field pattern 23 and the optical sensor 32 are conjugated with each other.

The arithmetic circuit 40 finds the inclination of the container body relative to the X and Y axes on the basis of the pattern received by the optical sensor 32 in a conventional manner disclosed in Japanese Patent Application Publication No. 2007-127628. A description thereof is omitted herein.

Next, the operation of the inclination detector 1 and liquid container 10 is described. A light beam is emitted from the LED 21 and converted to a parallel beam by the condenser lens 22, to project the dark-field pattern 23. Having transmitted through the dark-field pattern 23 and the beam splitter 24, the light beam is incident on the liquid 11 in the container body 12 via the relay lens 25 and collected and reflected by the liquid free surface 11A.

Reflected by the liquid free surface 11A, the light beam passes through the relay lens 25, is reflected by an inclined face 24A of the beam splitter 24, and reaches the optical sensor 32 via the projection lens 31 to form a pattern image thereon.

The arithmetic circuit 40 finds the inclination of the container body relative to the X and Y axes on the basis of the pattern formed on the optical sensor 32.

If the container body 12 is not inclined or the inclination detector 1 is placed with no inclination, the liquid free surface 11A will be level as indicated by the chain line H.

In this case the pattern of the light beam having transmitted through the beam splitter 24 is collected via the relay lens 25 and reflected by the center of the liquid free surface 11 or the center 14b of the spherical circumferential wall 14. Here, the liquid free surface 11 is in a circular form by the spherical circumferential wall 14 of the container body 12.

Meanwhile, if the container body 12 is inclined or the inclination detector is placed with inclination, the liquid free surface 11A comes at the position indicated by the solid line for example, and the center thereof coincides with the center 14b of the circumferential wall 14. Having transmitted through the beam splitter 24, the pattern of the light beam is collected and reflected by the center 14b of the circumferential wall 14.

Thus, even with the container body 12 inclined, the liquid free surface 11 is in a circular form by the spherical circumferential wall 14.

The size and circular shape of the liquid free surface 11A is always constant irrespective of the degree of inclination of the container body 12. Also, the curved shape of the center 14b of the liquid free surface 11A is always the same irrespective of the degree of inclination of the container body 12.

Thus, it is made possible for the inclination detector 1 to detect the inclination of the container body 12 with high precision without fail irrespective of the degree of inclination thereof relative to the level.

Further, owing to the spherical circumferential wall 14 of the container body 12, the inclination detector 1 can detect a large inclination of the container body 12 relative to the level. Moreover, the wave dissipating portion 13A having the spherical center portion can effectively dissipate waves of the liquid 11 occurring from a large inclination of the container body 12.

The above embodiment has described an example of the circumferential wall 4 having a spherical top part. However, the top part does not need to be spherical.

The inclination detector 1 can be applied to a laser sight as a surveying device, for example.

## Claims

1. An inclination detector (1), comprising:
a liquid container (10), comprising a container body (12) containing liquid (11) forming a free surface (11A) having a center;
a light source (21) to emit a light beam to the free surface (11A) of the liquid container (10);
a visual field pattern (23) disposed between the light source (21) and the free surface (11 A) to form a pattern of the light beam;
an optical relay element (25) disposed so that the light beam is reflected by the center of the free surface (11A);
an optical sensor (32) to detect the pattern of the light beam reflected by the free surface (11A); and
an arithmetic unit (40) to calculate an inclination angle of the container body (12) relative to the free surface (11A) on the basis of the pattern detected by the optical sensor;
**characterized in** the container body (12) having a circumferential wall (14) being spherical, and a wave-dissipating element (13A) spherically protruding upward from a center of a bottom (13) of the container body (12) and having a spherical center portion,
wherein the circumferential wall (14) is formed so that a center (14b) of the spherical circumferential wall (14) and the center of the free surface (11A) coincide with each other.

## Patentansprüche

1. Neigungsdetektor (1), welcher aufweist:
einen Flüssigkeitsbehälter (10), aufweisend einen Behälterkörper (12), der Flüssigkeit (11) enthält, die eine freie Oberfläche (11A) mit einer Mitte bildet;
eine Lichtquelle (21) zum Emittieren eines Lichtstrahls zu der freien Oberfläche (11A) des Flüssigkeitsbehälters (10);
ein visuelles Feldmuster (23), das zwischen der Lichtquelle (21) und der freien Oberfläche (11A) angeordnet ist, um ein Muster des Lichtstrahls zu bilden;
ein optisches Relaiselement (25), das so angeordnet ist, dass der Lichtstrahl durch die Mitte der freien Oberfläche (11A) reflektiert wird;
einen optischen Sensor (32) zum Erfassen des Musters des von der Mitte der freien Oberfläche (11A) reflektierten Lichtstrahls;
einen optischen Sensor (32) zum Erfassen des Musters des von der freien Oberfläche (11A) reflektieren Lichtstrahls; und
eine arithmetische Einheit (40) zum Berechnen eines Neigungswinkels des Behälterkörpers (12) relativ zu der freien Oberfläche (11A) auf der Grundlage des von dem optischen Sensor erfassten Musters;
**dadurch gekennzeichnet, dass**
der Behälterkörper (12) eine Umfangswand (14) hat, die sphärisch ist, und
ein wellenzerstreuendes Element (13A) sphärisch aufwärts von einer Mitte eines Bodens (13) des Behälterkörpers (12) vorsteht und einen sphärischen Mittelbereich hat, wobei die Umfangswand (14) so gebildet ist, dass eine Mitte (14b) der sphärischen Umfangswand (14) und die Mitte der freien Oberfläche (11A) miteinander übereinstimmen.

## Revendications

1. Détecteur d'inclinaison (1), comprenant:
un récipient de liquide (10), comprenant un corps de récipient (12) contenant un liquide (11) formant une surface libre (11A) ayant un centre ;
une source de lumière (21) pour émettre un faisceau de lumière vers la surface libre (11A) du récipient de liquide (10) ;
un motif de champ visuel (23) disposé entre la source de lumière (21) et la surface libre (11A) pour former un motif du faisceau de lumière ;
un élément de relais optique (25) disposé de sorte que le faisceau de lumière soit réfléchi par le centre de la surface libre (11A) ;
un capteur optique (32) pour détecter le motif du faisceau de lumière réfléchi par la surface libre (11A); et
une unité arithmétique (40) pour calculer un angle d'inclinaison du corps de récipient (12) par rapport à la surface libre (11A) sur la base du motif détecté par le capteur optique ;
**caractérisé en ce que** le corps de récipient (12) comporte une paroi circonférentielle (14) qui est sphérique, et un élément de dissipation d'onde (13A) fait saillie sphériquement vers le haut à partir d'un centre d'un fond (13) du corps de récipient (12) et comporte une partie centrale sphérique, dans lequel la paroi circonférentielle (14) est formée de sorte qu'un centre (14b) de la paroi circonférentielle sphérique et le centre de la surface libre (11A) coïncident l'un avec l'autre.
